# EUROPEAN PATENT SPECIFICATION

(11) **EP 2 926 988 B1**
(45) Date of publication and mention of the grant of the patent: **04.04.2018**
(21) Application number: 12889233.8
(22) Date of filing: 27.11.2012
(51) Int. Cl.: B32B 27/08, B32B 15/08

(54) **COSMETIC FILM**
KOSMETIKFILM
FILM COSMÉTIQUE

(43) Date of publication of application: 07.10.2015
(73) Proprietor: Riken Technos Corp., Chuo-ku Tokyo 103-8438 (JP)
(72) Inventor: SHIOTA, Satoshi, Tokyo 103-8438 (JP)
(74) Representative: Fenlon, Christine Lesley
(86) International application number: PCT/JP2012/080603
(87) International publication number: WO 2014/083610

(56) References cited:
- EP-A1- 0 411 152
- JP-A- H0 825 604
- JP-A- H1 076 623
- JP-A- H05 104 695
- JP-A- H07 186 355
- US-B1- 6 490 819

## Description

### Technical Field

The present invention relates to a decorative film, and more particularly to a decorative film that provides a deep, realistic three-dimensional appearance.

### Background Art

Traditionally, decorative films have been widely used to laminate metallic or wood materials used in refrigerators, washing machines, air conditioners, automobiles, furniture, cabinets, doors and windows, cupboards and other articles.

In recent years, there is an increasing demand for imparting an aesthetic appearance, in particular, a deep three-dimensional appearance, to various articles such as those listed above. For this reason, decorative laminates consisting of a glass plate laminated with a printed film are increasingly used primarily in the field of home electronic appliances (See, for example, Patent Documents 1 and 2 below).

However, while glass plates can provide a desirable deep three-dimensional appearance, they need to have a substantial thickness for that purpose. As a result, they tend to be heavy and difficult to handle or work with. Furthermore, glass plates are hard and less formable: they cannot be worked by bending and drawing processes. Also, glass plates break easily and unrecyclable.

Meanwhile, numerous attempts have been made to provide the deep three-dimensional appearance by the use of decorative films consisting of a synthetic resin layer laminated with a printed layer (See, for example, Patent Documents 3, 4, 5, 6 and 7 below).

Patent Document 6 discloses a sheet formed by disposing a printed pattern layer on a bottom surface of a transparent plastic base sheet and laminating another base sheet having a shading property over the printed pattern layer. Patent Document 7 discloses a decorative sheet having a reflective layer, a transparent layer formed on the reflective layer, a light shielding layer formed on the transparent layer, and a pattern layer interposed between the light shielding layer and the reflective layer. The light shielding layer is provided with a plurality of through holes for passing light towards and away from the reflective layer.

However, none of the conventional decorative films can provide high level three-dimensional appearances currently required in the art. Hence, there has been a need for improvement.

### Citation List

### Patent Document

Patent Document 1: JP-A-H05-133677
Patent Document 2: JP-A-2002-166516
Patent Document 3: JP-A-H10-34883
Patent Document 4: JP-A-H05-104695
Patent Document 5: JP-A-H05-220917
Patent Document 6: EP0411152A1
Patent Document 7: US6490819B1

### Summary of Invention

### Problems to be Solved by the Invention

Accordingly, it is an objective of the present invention to provide a decorative film that can provide a realistic three-dimensional appearance that can provide a deeper impression than does any of the conventional decorative films formed of a synthetic resin layer laminated with a printed layer.

### Solution to Problem

The present inventor has made a finding that the above-identified problems can be addressed by specifying the total light transmittance and the size of a printed layer in a decorative film formed of a synthetic resin layer and the printed layer, and by further specifying a foundation layer of the decorative film. It is this finding that ultimately led to the present invention.

Accordingly, the present invention is as follows:
1. A decorative film including, from the most surface side, a first transparent resin layer, a printed layer having a printed pattern, a second transparent resin layer, and a foundation layer in this order, wherein the printed pattern is configured such that a shadow of the printed pattern of the printed layer, which is projected onto the foundation layer by light entering from the most surface side, is visible through a non-printed area of the printed layer, where the non-printed area is an area of the printed layer where the printed pattern is not deposited, the decorative film satisfying all of the following requirements (a) through (d) :
   (a) the total light transmittance of the printed pattern of the printed layer is from 0 to 30%;
   (b) the area of the printed pattern of the printed layer relative to the area of the plane of the first transparent resin layer is 90% or less;
   (c) the thickness of the second transparent resin layer is form 50 µm to 5000 µm; and
   (d) the foundation layer is a brilliant layer or a monochromic layer having an L* value of 60 or higher.
2. The decorative film according to the item 1 above, wherein the non-printed area includes at least one region that can contain a circle with a diameter of 1 mm.

### Effect of the Invention

Since the decorative film of the present invention includes, from the most surface side, a first transparent resin layer, a printed layer, a second transparent resin layer, and a foundation layer in this order, specifies the total light transmittance and the printed area of the printed layer, defines the thickness of the second transparent resin layer, and uses a brilliant layer or a specific monochromic layer as the foundation layer, it can achieve a realistic three-dimensional appearance that can produce deeper impression than do the conventional decorative films.

As light enters from the most surface side of the decorative film of the present invention, the shadow of the printed layer is projected onto the brilliant layer or the monochromic layer. Since the thickness of the second transparent resin layer is defined within a specific range, the shadow can be visible through the non-printed area. As a result, a deep, realistic three-dimensional appearance is achieved.

In addition, because the decorative film of the present invention does not use any glass plates, it is easy to handle or work with and is highly formable while being recyclable.

### Brief Description of Drawings

FIG. 1 is a cross-sectional view of one embodiment of a decorative film of the present invention.
FIG. 2 is a diagram illustrating a situation where an observer of the decorative film is viewing the shadow of the printed pattern through the non-printed area.
FIG. 3 is a planar view illustrating an embodiment in which the non-printed area includes a region that can contain a circle with a diameter of 1 mm.

### Best Mode for Carrying Out the Invention

The present invention will now be described in further details.

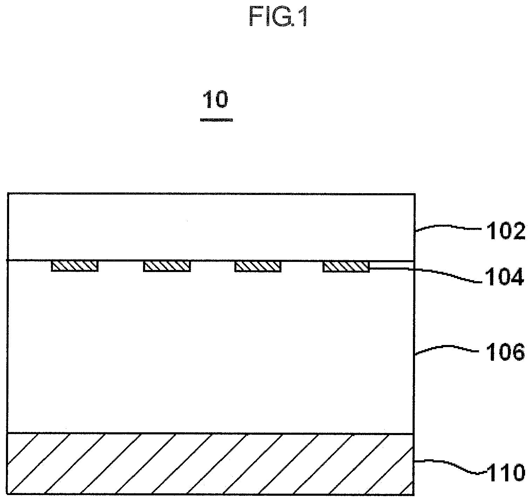

FIG. 1 is a cross-sectional view of one embodiment of a decorative film of the present invention. In FIG. 1, a decorative film 10 of the present invention includes a first transparent resin layer 102, a printed layer 104, a second transparent resin layer 106, and a foundation layer 110 that are disposed in this order from the most surface side. Each layer will now be described in the following.

The first transparent resin layer 102 may comprise any known transparent resin suitable for a desired application, including olefin resins, ester resins, acrylic resins, fluorine resins, vinyl chloride resins and styrene resins. The same or different transparent resin(s) may be laminated together. The first transparent resin layer 102 preferably has a total light transmittance of 60% or higher. As used herein, the term "total light transmittance" refers to a value determined according to ASTM D-1003.

The first transparent resin layer 102 has a thickness of, for example, from 1 µm to 500 µm, and preferably from 1 µm to 300 µm.

The printed layer 104 can be formed by depositing a desired printed pattern by gravure printing, flexo printing, offset printing, screen printing, ink jet printing or other printing techniques. The printed pattern may be any desired pattern including fine wood-grain patterns, abstract patterns, geometric patterns or other patterns.

According to the present invention, the printed pattern of the printed layer 104 must have a total light transmittance of 0 to 30% . This requirement can be met, for example, by using titanium oxide, carbon black, metallic, or the like as the printing ink, or by increasing the thickness of the printed layer (e.g., to 3 µm or greater) . More preferably, the printed pattern of the printed layer 104 has a total light transmittance of 0 to 20%. If the total light transmittance is greater than 30%, then the shadow of the printed pattern of the printed layer 104 may not be formed on the foundation layer described below. As a result, the desired deep three-dimensional appearance may not be obtained.

Also, according to the present invention, the area of the printed pattern of the printed layer 104 is 90% or less relative to the area of the plane of the first transparent resin layer. If the area of the printed pattern is greater than 90%, then the projected image of the printed pattern of the printed layer 104 may not be visible from the most surface side. As a result, the desired deep three-dimensional appearance may not be obtained.

More preferably, the area of the printed pattern of the printed layer 104 is 80% or less, still more preferably from 5 to 80%.

The second transparent resin layer 106 may comprise any known transparent resin suitable for a desired application, including olefin resins, ester resins, acrylic resins, fluorine resins, vinyl chloride resins and styrene resins. The same or different transparent resin(s) may be laminated together.

The second transparent resin layer 106 must have a thickness of 50 µm to 5000 µm. If the thickness is less than 50 µm, then the shadow of the printed pattern of the printed layer 104 may become hardly visible. As a result, the desired deep three-dimensional appearance may not be obtained. Conversely, if the thickness is greater than 5000 µm, then the decorative film may be difficult to handle during manufacturing or other processes. More preferably, the second transparent resin layer 106 has a thickness of 100 µm to 3000 µm.

The thickness of the second transparent resin layer 106 is appropriately selected depending on the form of decorative film for use, that is, depending on whether it is intended for the three-dimensional forming process, bending process (two-dimensional), or planar lamination process, for example.

For example, when the decorative film is intended for the three-dimensional forming process, the thickness of the second transparent resin layer 106 is preferably set to a relatively thin thickness, for example, within a range of 50 µm to 1000 µm. It is also preferred that the layers are firmly bonded together by thermal bonding or adhesives.

When the thickness of the second transparent resin layer 106 is 1000 µm or less, the decorative film 10 will not break or delaminate when it is subjected to a 5-mm forcing test on an Erichsen testing apparatus and will thus be suitable for the three-dimensional forming process.

When the decorative film is intended for the bending process, the thickness of the second transparent resin layer 106 is preferably set within a range of 50 µm to 3000 µm.

When the thickness of the second transparent resin layer 106 is 3000 µm or less, the decorative film 10 will not break when subjected to 90° bending (R = 15 mm) and will thus be able to withstand the two-dimensional forming process.

When the decorative film is intended for the planar lamination process, the thickness of the second transparent resin layer 106 is preferably set to a relatively large thickness, for example, within a range of 100 µm to 5000 µm to further enhance the deep three-dimensional appearance.

Preferably, the second transparent resin layer 106 has a total light transmittance of 70% or higher.

In terms of formability, the second transparent resin layer 106 preferably comprises an olefin resin, an ester resin, an acrylic resin, a fluorine resin, a vinyl chloride resin, a styrene resin, a vinyl butyral resin, or a carbonate resin. When the thickness of the second transparent resin layer 106 is set to a relatively large thickness, the second transparent resin layer 106 preferably comprises an acrylic resin, a carbonate resin, a vinyl butyral resin, a vinyl chloride resin, or an amorphous ester resin.

In terms of aesthetic appearance, the second transparent resin layer 106 preferably comprises an amorphous ester resin, an acrylic resin, a vinyl chloride resin, or a vinyl butyral resin.

Examples of the amorphous ester resins for use in the second transparent resin layer 106 include cyclohexane dimethanol copolymeric amorphous polyethylene terephthalate resins in which the dicarboxylic acid component is terephthalic acid and the glycol component is composed of 60 to 90 mol% of ethylene glycol and 10 to 40 mol% of cyclohexane dimethanol; neopentyl glycol copolymeric amorphous polyethylene terephthalate resins in which the dicarboxylic acid component is terephthalic acid and the glycol component is composed of 60 to 90 mol% of ethylene glycol and 10 to 40 mol% of neopentyl glycol; and isophthalic acid copolymeric amorphous polyethylene terephthalate resins in which the dicarboxylic acid component is composed of 60 to 98 mol% of terephthalic acid and 2 to 40 mol% of isophthalic acid and the glycol component is ethylene glycol. Of these, the cyclohexane dimethanol copolymeric amorphous polyethylene terephthalate resins in which the dicarboxylic acid component is terephthalic acid and the glycol component is composed of 60 to 90 mol% of ethylene glycol and 10 to 40 mol% cyclohexane dimethanol are particularly suitable for use.

Examples of the acrylic resins for use in the second transparent resin layer 106 include films formed of acrylic resins such as polymethyl methacrylate, polyethyl methacrylate, polybutyl methacrylate, and polyacrylonitrile; and copolymers having (meth)acrylate units and styrene units or urethane units. Mixed resins may also be used, including those composed of the above-described acrylic resin and a thermoplastic polyurethane resin, and those composed of the above-described acrylic resin and an acrylic rubber.

Examples of the polyvinyl chloride resins for use in the second transparent resin layer 106 include homopolymers of vinyl chloride and copolymers of vinyl chloride and vinyl acetate.

The foundation layer 110 is a brilliant layer or a monochromic layer having an L* value of 60 or higher. Examples of the brilliant layer include metal plates, such as iron plates, stainless plates, and aluminum plates; metal foils formed of metals such as gold, aluminum, silver, copper, brass, titanium, chromium, nickel, nickel-chromium, and stainless steel; resin layers having a vapor-deposited metal, such as gold, aluminum, silver, copper, brass, titanium, chromium, nickel, nickel-chromium, and stainless steel; and resin layers containing brilliant pigments, including metal pigments, such as aluminum and brass, and pearlescent (i.e., resembling pearls) pigments formed of a foil powder of titanium dioxide-coated mica or basic lead carbonate.

When the above-described resin layer having a vapor-deposited metal is used, the resin may be an olefin resin, an ester resin, an acrylic resin, a fluorine resin, a vinyl chloride resin, or a styrene resin. The metal may be deposited by any suitable technique, including physical vapor deposition (PVD) techniques, such as vacuum deposition, spattering, and ion plating; and chemical vapor deposition (CVD) techniques. It is preferred that the resulting deposited metal layer has a thickness of 20 to 500 nm.

When the above-described resin layer containing a brilliant pigment is used, the resin may be an olefin resin, an ester resin, an acrylic resin, a fluorine resin, a vinyl chloride resin, or a styrene resin. For example, the brilliant pigment may be added to the resin layer in an amount of 0.05 to 20 mass%.

The monochromic layer is a monochromic layer having an L* value of 60 or higher. As used herein, the L* value is a known measure of the brightness, which is an index of the degree of brightness of a color. The L* value can be determined according to JIS Z8722. A greater L* value indicates a higher brightness. The maximum L* value, or L* value = 100, corresponds to white, whereas the minimum L* value, or L* value = 0, corresponds to black.

If the L* value is lower than 60, then the shadow of the printed pattern of the printed layer 104 may become hardly visible and the desired deep three-dimensional appearance may not be achieved. More preferably, the L* value is 70 or higher.

The provision of the foundation layer 110 increases the sharpness of the shadow of the printed pattern of the printed layer 104 and further enhances the deep appearance.

The thickness of the foundation layer 110 is preferably from 1 µm to 200 µm, more preferably from 1 µm to 150 µm. The foundation layer 110 is preferably in white, pale gray, yellow or other suitable colors.

The foundation layer 110 may be adhesive so that it can be bonded to an adherend of the decorative film.

The decorative film of the present invention can be produced in the following manner.

Specifically, a first transparent resin layer 102 is prepared first. A printed layer 104 having a printed pattern is then deposited on the first transparent resin layer 102 using any of the above-described printing techniques. A second transparent resin layer 106 and a foundation layer 110 are then laminated onto the printed layer 104 by the heat lamination process.

In an alternative method, a first transparent resin layer 102 may be prepared first. A printed layer 104 having a printed pattern may then be deposited on the first transparent resin layer 102 using any of the above-described printing techniques. A second transparent resin layer 106 and a foundation layer 110 may then be bonded to the printed layer 104 by an adhesive.

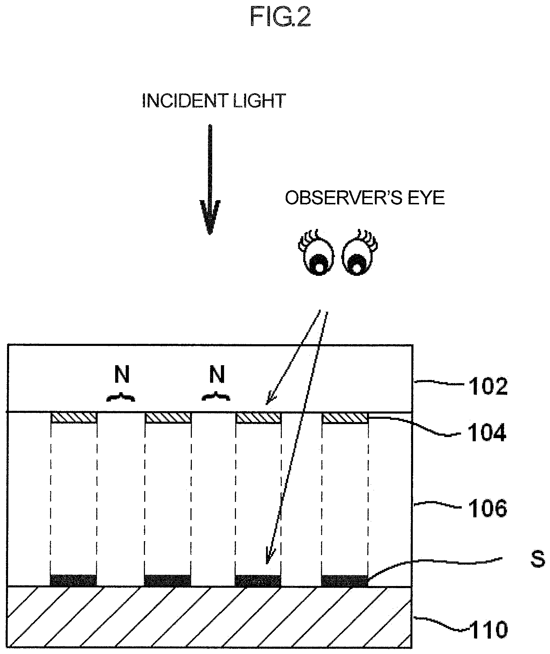

FIG. 2 is a diagram illustrating a situation where an observer of the decorative film is viewing the shadow through the non-printed area.

As light enters from the most surface side of the decorative film 10 of the present invention, the shadow S of the printed pattern of the printed layer 104 is projected onto the foundation layer 110. The observer sees the printed pattern and its shadow S at once through the first transparent resin layer 102 and the underneath non-printed area N of the printed layer 104 where the printed pattern is not deposited. In this manner, it appears to the observer that the printed layer 104 has a depth behind the printed pattern and, as a result, he experiences deep, three-dimensional feeling.

Preferably, the non-printed area N includes at least one region that can contain a circle with a diameter of 1 mm in order for the observer to see the printed pattern of the printed layer 104 and its shadow S distinctively.

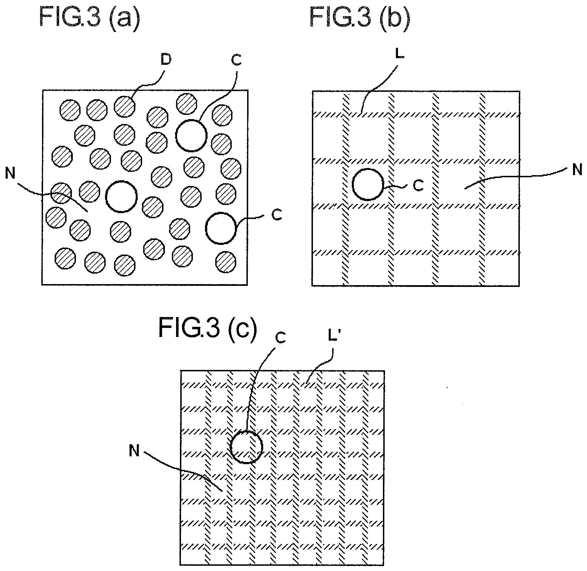

FIG. 3 is a planar view illustrating an embodiment in which the non-printed area includes a region that can contain a circle with a diameter of 1 mm.

FIG. 3A is a planar view illustrating one example in which the printed pattern of the printed layer 104 is an irregularly arranged dot pattern D. In this case, some parts of the dot pattern include a region that can contain a circle with a diameter of 1 mm C. Thus, the spaces of the non-printed area N that correspond to a circle with a diameter of 1 mm C will allow the observer to see the printed pattern and its shadow S at once through the non-printed area N where the printed pattern is not deposited. In this manner, it appears to the observer that the printed layer 104 has a depth behind the printed pattern and, as a result, he experiences deep, three-dimensional feeling.

FIG. 3B is a planar view illustrating another example in which the printed pattern of the printed layer 104 is a lattice pattern L. Again, some parts of the dot pattern include a region that can contain a circle with a diameter of 1 mm C. This will allow the observer to see the printed pattern and its shadow S at once through the non-printed area N where the printed pattern is not deposited. In this manner, it appears to the observer that the printed layer 104 has a depth behind the printed pattern and, as a result, he experiences deep, three-dimensional feeling.

In contrast, the printed pattern of the printed layer 104 shown in another example in FIG. 3C is a lattice patter L' in which the non-printed area N doesn't include any regions that can contain a circle with a diameter of 1 mm C. In this example, the observer can hardly see the printed pattern and its shadow S at once through the non-printed area N even though the area of the printed pattern of the printed layer 104 is 90% or less relative to the area of the plane of the first transparent resin layer 102. As a result, the observer no longer receives the impression that the printed layer 104 has a depth behind the printed pattern and, as a result, he cannot experience the desired deep, three-dimensional feeling.

Preferably, the non-printed area in each product includes one or more regions that can contain a circle with a diameter of 1 mm.

### Examples

The present invention will now be described with reference to examples and comparative examples, which are not intended to limit the present invention in any way.

### Example 1

A 100-µm-thick polyethylene terephthalate film (T60 (trade name), manufactured by Toray) was used as the first transparent resin layer 102. A dot pattern was printed on the first transparent resin layer 102 by gravure printing to deposit a printed layer 104.

The dot pattern was deposited using a titanium oxide ink and had a total light transmittance of 5%. The area of the dot pattern was 50% relative to the area of the first transparent resin layer 102. The non-printed area N included many regions that could each contain a circle with a diameter of 1 mm C. In other words, there were many spaces in the non-printed area N that had a size corresponding to a circle with a diameter of 1 mm C.

Subsequently, a 300-µm-thick polyethylene terephthalate film (T60 (trade name), manufactured by Toray) to serve as the second transparent resin layer 106 was bonded over the printed layer 104 by an adhesive (TOYOBO VYLON 63SS; 3 µm thick).

A 10-µm-thick aluminum foil to serve as the foundation layer 110 was then bonded over the second transparent resin layer 106 by an adhesive (TOYOBO VYLON 63SS; 3 µm thick).

The resulting decorative film was evaluated as described below and the results were summarized in tables below.

### Aesthetic appearance

5 participants (A through E) were asked whether s/he had received any deep three-dimensional impression from the film. Specifically, the film was rated on the following scale:
2 points: both the printed pattern and its shadow S were visible through the non-printed area N where the printed pattern was not deposited. The participant had the impression that the printed layer 104 had a depth behind the printed pattern and experienced deep, realistic three-dimensional feeling;
1 point: the participant experienced moderate three-dimensional feeling; and
0 point: the participant did not experience any three-dimensional feeling.

If the total score of 5 participants is 8 points or more, then the film can be determined to have a deep, realistic three-dimensional appearance (assigned a "double circle" rating).

If the total score of 5 participants is 5 to 7 points, then the film can be determined to have some deep three-dimensional appearance, though not as significant as those rated as double circle (assigned a "single circle" rating).

If the total score of 5 participants is 3 to 4 points, then the film is determined to have less-than-satisfactory deep three-dimensional appearance, though it is barely acceptable (assigned a "triangle" rating).

If the total score of 5 participants is 2 points or less, then the film is determined to have an insufficient deep three-dimensional appearance and is rated as failure (assigned a "cross" rating).

### Handleability during production

The handleabiliy of a raw web of the decorative film during each production process was evaluated according to the following criteria:
a circle indicates that the film was readily handleable;
a triangle indicates that the film could be handled, but only with some difficulty; and
a cross indicates that the film was excessively heavy and difficult to handle.

### Example 2

The same procedure was repeated as in Example 1, except that the thickness of the first transparent resin layer 102 was changed to 50 µm and the thickness of the second transparent resin layer 106 was changed to 200 µm.

### Example 3

The same procedure was repeated as in Example 1, except that the thickness of the second transparent resin layer 106 was changed to 4000 µm.

### Example 4

The same procedure was repeated as in Example 1, except that the second transparent resin layer 106 was changed to a 200 µm polyvinyl chloride film (product name S3238 Fc025, manufactured by Riken Technos).

### Example 5

The same procedure was repeated as in Example 1, except that the second transparent resin layer 106 was changed to a 200 µm acryl film (product name TECHNOLLOY, manufactured by Sumika Acryl).

### Example 6

The same procedure was repeated as in Example 1, except that the second transparent resin layer 106 was changed to a 200 µm PETG film (cyclohexane dimethanol copolymeric amorphous polyethylene terephthalate; product name TPT027 FZ025, manufactured by Riken Technos) .

### Example 7

The same procedure was repeated as in Example 1, except that the foundation layer 110 was changed to a 100 µm white polyvinyl chloride film (product name S23127 Fc13644 (L* value = 95), manufactured by Riken Technos).

### Example 8

The same procedure was repeated as in Example 1, except that the conditions for printing the dot pattern of the printed layer 104 were varied to change the total light transmittance to 25%.

### Example 9

The same procedure was repeated as in Example 1, except that the printed pattern of the printed layer 104 was changed to a lattice pattern with a total light transmittance of 5% and the printed area of the lattice pattern was changed to 85% relative to the area of the plane of the first transparent resin layer 102.

### Example 10

The same procedure was repeated as in Example 1, except that the thickness of the second transparent resin layer 106 was changed to 50 µm.

### Example 11

The same procedure was repeated as in Example 1, except that the foundation layer 110 was changed to a pale gray monochromic layer with an L* value of 65.

### Comparative Example 1

The same procedure was repeated as in Example 1, except that the conditions for printing the dot pattern of the printed layer 104 were varied to change the total light transmittance to 35%.

### Comparative Example 2

The same procedure was repeated as in Example 1, except that the printed pattern of the printed layer 104 was changed to a lattice pattern with a total light transmittance of 5% and the printed area of the lattice pattern was changed to 95% relative to the area of the plane of the first transparent resin layer 102.

### Comparative Example 3

The same procedure was repeated as in Example 1, except that the thickness of the second transparent resin layer 106 was changed to 25 µm.

### Comparative Example 4

The same procedure was repeated as in Example 1, except that the brilliant layer 110 was changed to a dark gray monochromic layer with an L* value of 50.

### Comparative Example 5

The same procedure was repeated as in Example 1, except that the thickness of the second transparent resin layer 106 was changed to 6000 µm.

**Table 1**

| | | Example 1 | | Example 2 | | Example 3 | | Example 4 | | Example 5 | | Example 6 | |
|---|---|---|---|---|---|---|---|---|---|---|---|---|---|
| Construction | First transparent resin layer | 100*µ*mPET | | 50*µ*mPET | | 100*µ*mPET | | 100*µ*mPET | | 100*µ*mPET | | 100*µ*mPET | |
| | Printed layer | White ink (Total light transmittance 5%) | | White ink (Total light transmittance 5%) | | White ink (Total light transmittance 5%) | | White ink (Total light transmittance 5%) | | White ink (Total light transmittance 5%) | | White ink (Total light transmittance 5%) | |
| | | Dot pattern (Printed area 50%) | | Dot pattern (Printed area 50%) | | Dot pattern (Printed area 50%) | | Dot pattern (Printed area 50%) | | Dot pattern (Printed area 50%) | | Dot pattern (Printed area 50%) | |
| | Second transparent resin layer | 300*µ*mPET | | 200*µ*mPET | | 4000*µ*mPET | | 200*µ*mPVC | | 200*µ*m acrylic | | 200*µ*mPETG | |
| | Foundation layer | 10*µ*m Aluminum foil | | 10*µ*m Aluminum foil | | 10*µ*m Aluminum foil | | 10*µ*m Aluminum foil | | 10*µ*m Aluminum foil | | 10*µ*m Aluminum foil | |
| Physical property test | 3-B aesthetic appearance visually evaluated by 5 participants. | Participant A | 2 pts | Participant A | 1 pt | Participant A | 2 pts | Part icipant A | 2 pts | Part icipant A | 2 pts | Participant A | 2 pts |
| | Significantdeep3-D appearance: 2 pts | Participant B | 2 pts | Participant B | 1 pt | Participant B | 2 pts | Participant B | 1 pt | Participant B | 2 pts | Participant B | 1 pt |
| | Some 3-D appearance:1 pt | Part icipant C | 1 pt | Participant C | 1 pt | Participant C | 2 pts | Participant C | 1 pt | Participant C | 1 pt | Participant C | 1 pt |
| | No 3-D appearance: 0 pt | Participant D | 2 pts | Participant D | 1 pt | Participant D | 2 pts | Participant D | 1 pt | Participant D | 1 pt | Part icipant D | 2 pts |
| | | Participant E | 1 pt | Participant E | 1 pt | Participant E | 2 pts | Participant E | 1 pt | Participant E | 1 pt | Participant E | 1 pt |
| | Total score | Total = 8 pts | | Total = 5 pts | | Total = 10 pts | | Total = 6 pts | | Total = 7 pts | | Total = 7 pts | |
| | 8 pts or higher · · · ⊚ | | | | | | | | | | | | |
| | 5 - 7 pts · · · ○ | | | | | | | | | | | | |
| | 3 - 4 pts · · · Δ | | | | | | | | | | | | |
| | 2 pts or lower · · · × | ⊚ | | ○ | | ⊚ | | ○ | | ○ | | ○ | |
| | Handleability during production | ○ | | ○ | | Δ | | ○ | | ○ | | ○ | |
| | ○ · · · Good | | | | | | | | | | | | |
| | Δ · · · Fair with some difficulty | | | | | | | | | | | | |
| | × · · · Poor | | | | | | | | | | | | |

**Table 2**

| | | Example 7 | | Example 8 | | Example 9 | | Example 10 | | Example 11 | |
|---|---|---|---|---|---|---|---|---|---|---|---|
| Construction | First transparent resin layer | 100*µ*mPET | | 100*µ*mP ET | | 100*µ*mPET | | 100*µ*mPET | | 100*µ*mPET | |
| | Printed layer | White ink (Total light transmittance 5%) | | White ink (Total light transmittance 25%) | | White ink (Total light transmittance 5%) | | White ink (Total light transmittance 5%) | | White ink (Total light transmittance 5%) | |
| | | Dot pattern (Printed area 50%) | | Dot pattern (Printed area 50%) | | Dot pattern (Printed area 85%) | | Dot pattern (Printed area 50%) | | Dot pattern (Printed area 50%) | |
| | Second transparent resin layer | 300*µ*mPET | | 300*µ*mP ET | | 300*µ*mPET | | 50*µ*mPET | | 300*µ*mPET | |
| | Foundation layer | 100*µ*m White PVC (L* value 95) | | 10*µ*m Aluminum foil | | 10*µ*m Aluminum foil | | 10*µ*m Aluminum foil | | 100*µ*m Pale gray PVC (L* value 65) | |
| Physical property test | 3-D aesthetic appearance visually evaluated by 5 participants. | Participant A | 2 pts | Participant A | 1 pt | Participant A | 1 pt | Part icipant A | 0 pt | Participant A | 1 pt |
| | Significant deep 3-D appearance: 2 pts | Participant B | 2 pts | Participant B | 1 pt | Participant B | 0 pt | Part icipant B | 1 pt | Participant B | 1 pt |
| | Some 3-D appearance: 1 pt | Part icipant C | 1 pt | Participant C | 1 pt | Part icipant C | 1 pt | Participant C | 1 pt | Participant C | 0 pt |
| | No 3-D appearance: 0 pt | Participant D | 1 pt | Participant D | 0 pt | Participant D | 1 pt | Part icipant D | 0 pt | Participant D | 1 pt |
| | | Participant E | 1 pt | Participant E | 1 pt | Participant E | 0 pt | Participant E | 1 pt | Participant E | 0 pt |
| | Total score | Total = 7 pts | | Total = 4 pts | | Total = 3 pts | | Total = 3 pts | | Total = 3 pts | |
| | 8 pts or higher · · · ⊚ | | | | | | | | | | |
| | 5 - 7 pts · · · ○ | | | | | | | | | | |
| | 3 - 4 pts · · · Δ | | | | | | | | | | |
| | 2 pts or lower · · · × | ○ | | Δ | | Δ | | Δ | | Δ | |
| | Handleability during production | ○ | | ○ | | ○ | | ○ | | ○ | |
| | ○ · · · Good | | | | | | | | | | |
| | Δ · · · Fair with some difficulty | | | | | | | | | | |
| | × · · · Poor | | | | | | | | | | |

**Table 3**

| | | Comparative Example 1 | | Comparative Example 2 | | Comparative Example 3 | | Comparative Example 4 | | Comparative Example 5 | |
|---|---|---|---|---|---|---|---|---|---|---|---|
| Construction | First transparent resin layer | 100*µ*mPET | | 100*µ*mPET | | 100*µ*mPET | | 100*µ*mPET | | 100*µ*mPET | |
| | Printed layer | White ink (Total light transmittance 35%) | | White ink (Total light transmittance 5%) | | White ink (Total light transmittance 5%) | | White ink (Total light transmittance 5%) | | White ink (Total light transmittance 5%) | |
| | | Dot pattern (Printed area 50%) | | Dot pattern (Printed area 95%) | | Dot pattern (Printed area 50%) | | Dot pattern (Printed area 50%) | | Dot pattern (Printed area 50%) | |
| | Second transparent resin layer | 300*µ*mPET | | 300*µ*mP ET | | 25*µ*mPET | | 300*µ*mPET | | 6000*µ*mPET | |
| | Foundation layer | 10*µ*m Aluminum toil | | 10*µ*m Aluminum foil | | 10*µ*m Aluminum foil | | 100*µ*m Pale gray PVC (L* value 50) | | 10*µ*m Aluminum foil | |
| Physical property test | 3-D aesthetic appearance visually evaluated by 5 participants. | Participant A | 1 pt | Part icipant A | 0 pt | Participant A | 0 pt | Participant A | 0 pt | Part icipant A | 2 pts |
| | Significant deep 3-D appearance: 2 pts | Participant B | 0 pt | Part icipant B | 0 pt | Part icipant B | 0 pt | Participant B | 0 pt | Participant B | 2 pts |
| | Some 3-D appearance: 1 pt | Participant C | 1 pt | Participant C | 1 pt | Participant C | 1 pt | Participant C | 0 pt | Participant C | 2 pts |
| | No S-D appearance: 0 pt | Participant D | 0 pt | Part icipant D | 1 pt | Participant D | 0 pt | Participant D | 0 pt | Participant D | 2 pts |
| | | Participant E | 0 pt | Participant E | 0 pt | Participant E | 0 pt | Participant E | 0 pt | Participant E | 2 pts |
| | Total score | Total = 2 pts | | Total = 2 pts | | Total = 1 pt | | Total = 0 pt | | Total = 10 pts | |
| | 8 pts or higher · · · ⊚ | | | | | | | | | | |
| | 5 - 7 pts · · · | | | | | | | | | | |
| | 3 - 4 pts · · · Δ | | | | | | | | | | |
| | 2 pts or lower · · · × | × | | × | | × | | × | | ⊚ | |
| | Handleability during production | ○ | | ○ | | ○ | | ○ | | × | |
| | O · · · Good | | | | | | | | | | |
| | Δ · · · Fair with some difficulty | | | | | | | | | | |
| | × · · · Poor | | | | | | | | | | |

The decorative film of the present invention, which included, from the most surface side, a first transparent resin layer, a printed layer, a second transparent resin layer, and a foundation layer in this order, specified the thickness of the second transparent resin sheet, and used a brilliant layer or a specific monochromic layer as the foundation layer, was able to achieve a realistic three-dimensional appearance that would produce deeper impression than the conventional decorative films.

In contrast, the decorative film of Comparative Example 1, in which the total light transmittance of the printed pattern of the printed layer 104 was greater than the upper limit specified by the present invention, failed to provide the desired deep three-dimensional appearance.

The decorative film of Comparative Example 2, in which the printed area of the printed pattern of the printed layer 104 was greater than the upper limit specified by the present invention, failed to provide the desired deep three-dimensional appearance.

The decorative film of Comparative Example 3, in which the thickness of the second transparent resin layer 106 was smaller than the lower limit specified by the present invention, failed to provide the desired deep three-dimensional appearance.

The decorative film of Comparative Example 4, in which the L* value of the foundation layer 110 was greater than the upper limit specified by the present invention, failed to provide the desired deep three-dimensional appearance.

The decorative film of Comparative Example 5, in which the thickness of the second transparent resin layer 106 was greater than the upper limit specified by the present invention, was difficult to handle during the production process.

### Industrial Applicability

The decorative film of the present invention can provide a deep, realistic three-dimensional appearance and is thus suitable for use as a cosmetic material for metallic or wood materials used in refrigerators, washing machines, air conditioners, automobiles, furniture, cabinets, doors and windows, cupboards and other articles.

### Reference Numerals

- 10: decorative film
- 102: first transparent resin layer 102
- 104: printed layer
- 106: second transparent resin layer
- 110: foundation layer
- N: unprinted area
- S: shadow

## Claims

1. A decorative film (10) comprising, from the most surface side, a first transparent resin layer (102), a printed layer (104) having a printed pattern, a second transparent resin layer (106), and a foundation layer (110) in this order, wherein the printed pattern is configured such that a shadow of the printed pattern of the printed layer (104), which is projected onto the foundation layer (110) by light entering from the most surface side, is visible through a non-printed area of the printed layer (104), where the non-printed area is an area of the printed layer (104) where the printed pattern is not deposited, the decorative film (10) satisfying all of the following requirements (a) through (d):
(a) the total light transmittance of the printed pattern of the printed layer (104) is from 0 to 30%;
(b) the area of the printed pattern of the printed layer (104) relative to the area of the plane of the first transparent resin layer (102) is 90% or less;
(c) the thickness of the second transparent resin layer (106) is from 50 to 5000 µm; and
(d) the foundation layer (110) is a brilliant layer or a monochromic layer having an L* value of 60 or higher.

2. The decorative film according to claim 1, wherein the non-printed area includes at least one region that can contain a circle with a diameter of 1 mm.

## Patentansprüche

1. Dekorativer Film (10), der von der äußersten Oberflächenseite her eine erste lichtdurchlässige Harzschicht (102), eine bedruckte Schicht (104) mit einem gedruckten Muster, eine zweite lichtdurchlässige Harzschicht (106) und eine Grundschicht (110) in dieser Reihenfolge umfasst, wobei das gedruckte Muster derart konfiguriert ist, dass ein Schatten von dem gedruckten Muster der bedruckten Schicht (104), der durch Licht auf die Grundschicht (110) projiziert wird, das von der äußersten Oberflächenseite her eintritt, durch einen nicht bedruckten Bereich der bedruckten Schicht (104) sichtbar ist, wobei der nicht bedruckte Bereich ein Bereich der bedruckten Schicht (104) ist, in welchem das gedruckte Muster nicht abgeschieden ist, wobei der dekorative Film (10) alle der folgenden Anforderungen (a) bis (d) erfüllt:
(a) die Gesamtlichtdurchlässigkeit des gedruckten Musters der bedruckten Schicht (104) beträgt 0 bis 30 %;
(b) der Bereich des gedruckten Musters der bedruckten Schicht (104) relativ zu der Fläche der Ebene der ersten lichtdurchlässigen Harzschicht (102) beträgt 90 % oder weniger;
(c) die Dicke der zweiten lichtdurchlässigen Harzschicht (106) beträgt 50 bis 5.000 µm; und
(d) die Grundschicht (110) ist eine brillante Schicht oder eine monochrome Schicht mit einem L*-Wert von 60 oder höher.

2. Dekorativer Film nach Anspruch 1, wobei der nicht bedruckte Bereich mindestens einen Bereich umfasst, der einen Kreis mit einem Durchmesser von 1 mm enthalten kann.

## Revendications

1. Film décoratif (10) comprenant, à partir du côté de la plus grande surface, une première couche de résine transparente (102), une couche imprimée (104) ayant un motif imprimé, une seconde couche de résine transparente (106), et une couche de fondation (110) dans cet ordre, le motif imprimé étant configuré de telle sorte qu'une ombre du motif imprimé de la couche imprimée (104), qui est projetée sur la couche de fondation (110) par la lumière entrant par le côté de la plus grande surface, est visible à travers une zone non imprimée de la couche imprimée (104), dans lequel la zone non imprimée est une zone de la couche imprimée (104) où le motif imprimé n'est pas déposé, le film décoratif (10) satisfaisant à toutes les exigences suivantes (a) à (d) :
(a) la transmittance lumineuse totale du motif imprimé de la couche imprimée (104) est de 0 à 30 % ;
(b) la surface du motif imprimé de la couche imprimée (104) par rapport à la surface du plan de la première couche de résine transparente (102) est de 90 % ou moins ;
(c) l'épaisseur de la seconde couche de résine transparente (106) est comprise entre 50 et 5 000 µm ; et
(d) la couche de fondation (110) est une couche brillante ou une couche monochrome ayant une valeur L* de 60 ou plus.

2. Film décoratif selon la revendication 1, dans lequel la zone non imprimée comprend au moins une région qui peut contenir un cercle ayant un diamètre de 1 mm.
